# EUROPÄISCHE PATENTSCHRIFT

(11) **EP 0 848 981 B1**
(45) Veröffentlichungstag und Bekanntmachung des Hinweises auf die Patenterteilung: **02.03.2005**
(21) Anmeldenummer: 97119614.2
(22) Anmeldetag: 10.11.1997
(51) Int. Cl.: B01D 53/047, B01D 53/053

(54) **Druckwechselanlage zur Gewinnung von Sauerstoff aus der Luft und Verfahren zum Betrieb einer solchen**
Pressure swing adsorption plant to separate oxygen from the air and process to operate the same
Installation et procédé d'adsorption à variation de pression pour l'extraction de l'oxygène de l'air

(30) Priorität: 11.12.1996 DE 19651458; 18.06.1997 DE 19725678
(43) Veröffentlichungstag der Anmeldung: 24.06.1998
(73) Patentinhaber: SGI-PROZESS-TECHNIK GmbH, 63674 Altenstadt (DE)
(72) Erfinder: Amlinger, Heinrich, 61194 Niddatal (DE)
(74) Vertreter: Hebing, Norbert

(56) Entgegenhaltungen:
- EP-A- 0 082 948
- EP-A- 0 447 029
- WO-A-93/10882
- US-A- 4 614 525
- US-A- 5 529 611
- Katalog "Vakuumtechnik" der Firma SIHI-HALBERG, Itzehoe (D) Teil Vakuumtechnik WPH 07/84 133.33201.53.01 W 3 XP002059743

## Beschreibung

Die Erfindung betrifft eine Druckwechselanlage zur Gewinnung von Sauerstoff aus der Luft, welche zumindest einen Adsorber mit synthetischem Zeolith hat, an welchem zum wechselnden Betrieb ein Luftgebläse für die Adsorptionsluft und ein vakuumpumpstand zur Desorption des Adsorbers angeschlossen sind, wobei der Vakuumpumpstand zwei hintereinander geschaltete Vakuumpumpen hat und Mittel vorgesehen sind, um das Desorptionsgas zu kühlen. Weiterhin betrifft die Erfindung ein Verfahren zum Betrieb einer solchen Druckwechselanlage.

Eine Druckwechselanlage der vorstehenden Art, welche jedoch der Gewinnung von Stickstoff aus der Luft dient, ist beispielsweise in der DE-A-31 46 189 beschrieben. Bei dem Vakuumpumpstand der bekannten Druckwechselanlage ist zwischen den beiden Vakuumpumpen ein als Wärmetauscher ausgebildeter und deshalb im Gegensatz zu einer allgemein angewandten Kühlung durch Wassereinspritzen trocken arbeitender Zwischenkühler angeordnet, welcher die von der ersten Vakuumpumpe komprimierte Luft so weit abkühlt, dass es bei der zweiten vakuumpumpe nicht zu einer Überhitzung kommt. Die zweite Vakuumpumpe ist mit einer Voreinlasskühlung versehen. Die Druckwechselanlage nach dieser Schrift arbeitet mit Adsorptionsdrücken zwischen 1 bar und 2,5 bar und Desorptionsdrücken vom 85 mbar.

Bei Druckwechselanlagen zur Sauerstoffgewinnung hat sich jedoch die Kühlung der Luft durch Wassereinspritzen durchgesetzt, weil man davon ausging, dass der Vakuumpumpstand mit den beiden Vakuumpumpen dann nahezu isotherm und deshalb energetisch besonders günstig arbeiten kann.

Das Einspritzen von Wasser in die vom Vakuumpumpstand abgesaugte, O₂-abgereicherte Luft setzt voraus, dass aufbereitetes Wasser höchster Sauberkeit und Freiheit von Mineralien benutzt wird, damit es nicht zu einer Funktionsstörung der Vakuumpumpen kommt. Oftmals steht jedoch für die Einspritzung kein oder kein geeignetes Wasser zur Verfügung, so dass Anlagen mit Wassereinspritzung dann nicht in Frage kommen und man energetisch etwas ungünstigeren Anlagen, wie sie in der eingangs genannten DE-A-31 46 189 beschrieben sind, den Vorzug gibt. Da solche Anlagen jedoch Kühlwasser für die Luftkühlung benötigen, bereitet bei manchen Orten auch ihr Einsatz Schwierigkeiten. Ein Verzicht auf Kühlwasser oder Einspritzwasser war bislang jedoch nicht möglich, weil die üblicherweise als Drehkolbenpumpen ausgebildeten Vakuumpumpen eine maximale Temperatur von etwa 125°C bis 130°C vertragen und bei den bekannten Anlagen die abgesaugte Luft sich ohne Kühlung durch den Kompressionsvorgang im Vakuumpumpstand nach der zweiten Stufe auf etwa 200°C erwärmen würde.

Eine für die Sauerstoffgewinnung eingesetzte Druckwechselanlage ist in der US 4,614,525 beschrieben. Diese Anlage arbeitet mit Desorptionsdrücken zwischen 5 und 300 mbar und Adsorptionsdrücken von etwa 1 bar und benutzt als Adsorptionsmaterial in Übereinstimmung mit der vorliegenden Erfindung synthetisches Zeolith. Auch ist eine Kühlung der Vakuumpumpe vorgesehen. Hierzu wird von einem Gebläse G Umgebungsluft über eine Wärmetäuscherfläche der Vakuumpumpe gesaugt.

Der Erfindung liegt das Problem zugrunde, eine Druckwechselanlage der eingangs genannten Art so auszubilden, dass sie ohne Einspritzwasser oder Kühlwasser energetisch günstig und mit Drehkolbenpumpen nicht thermisch gefährdenden Temperaturen zu arbeiten vermag. Weiterhin soll ein Verfahren zum Betreiben einer solchen Druckwechselanlage entwickelt werden.

Das erstgenannte Problem wird erfindungsgemäß dadurch gelöst, dass in Strömungsrichtung gesehen die zweite Vakuumpumpe eine voreinlassgekühlte Drehkolbenpumpe ist und die Mittel aus Kühllufteintrittsöffnungen an der zweiten Vakuumpumpe zum definierten Einströmen von Außenluft atmosphärischen Drucks in die Förderräume der zweiten Vakuumpumpe bestehen,, und dass der Vakuumpumpstand mit Steuereinrichtungen zum Erzeugen eines Desorptionsdruckes zwischen 300 mbar und 500 mbar versehen ist.

Dadurch, dass gemäß der Erfindung mit höheren Desorptionsdrücken als beim Stand der Technik gearbeitet wird, kommt es in der zweiten, gegen die Atmosphäre arbeitenden Vakuumpumpe zu einer verhältnismäßig geringen verdichtungsarbeit. Die dabei entstehende Wärme verursacht durch das Beimischen von Luft aus der Atmosphäre keinen oder keinen wesentlichen Temperaturanstieg, so dass der Vakuumpumpstand gänzlich ohne Wassereinspritzung oder Wasserkühlung zu arbeiten vermag. Überraschenderweise zeigten Messungen an einer gebauten, erfindungsgemäßen Druckwechselanlage, dass bei ihr bei gleicher Sauerstofflieferleistung wie bei bekannten Druckwechselanlagen der Energiebadarf sogar geringer ist.

Einen besonders geringen Energiebedarf erreicht man, wenn gemäß einer vorteilhaften Weiterbildung der Erfindung die Kühllufteintrittsöffnungen der zweiten Vakuumpumpe so bemessen und positioniert sind, dass das Verhältnis des Gesamtmassenstromes des angesaugten Massenstroms von der ersten Vakuumpumpe und des Kühlluftmassenstroms zum Kühlluftmassenstrom am Anfang des Desorptionszyklus von einem hohen Wert rasch auf 33 abfällt und innerhalb des Desorptionszyklus bis zum Ende langsam auf 1,5 absinkt.

Wichtig für das erfindungsgemäße Kühlprinzip ist, dass bei der als Vakuumpumpe arbeitenden Drehkolbenpumpe die Drehkolben die Verbindung zum Einlassstutzen sperren, bevor die fördernde Pumpenkammer Verbindung mit der Atmosphäre erhält und dadurch die Luft einströmen und Verdichtungsarbeit leisten kann. Das lässt sich wirtschaftlich dadurch verwirklichen, dass gemäß einer anderen Weiterbildung der Erfindung die Kühllufteintrittsöffnungen im zweiten Quadranten frühestens bei 36° beginnen und vor 90° enden.

Die Grundfrequenz der Pulsationen kann verdoppelt werden, so dass einfache Pulsationsdämpfer eingesetzt werden können, wenn die Kühllufteintrittsöffnungen über eine gemeinsame Leitung mit der Atmosphäre verbunden sind.

Da das Luftgebläse für die Adsorptionsluft und der Vakuumpumpstand beim Arbeiten stark störende Geräusche erzeugen, werden diese Anlagenteile meist in einem schallisolierten Boxcontainer angeordnet. Deshalb muss erheblicher Aufwand zur Kühlung durch einen zwangsweise geführten Luftstrom getrieben werden. Dieser Aufwand lässt sich verhältnismäßig gering halten, wenn gemäß einer anderen Weiterbildung der Erfindung zur Kühlung der Anlageteile ein Gebläse eines für die Adsorptionsluft notwendigen Luftkühlers vorgesehen ist und wenn ein Kühlluftstrom entlang des Vakuumpumpstandes und des Luftgebläses für die Adsorptionsluft zu dem Gebläse führt.

Eine zu niedrige Eingangstemperatur der Luft in den jeweiligen Adsorber lässt sich auf einfache Weise dadurch vermeiden, dass das Gebläse einen Ventilatormotor mit geregelter Drehzahl aufweist. Hierdurch kann man bei niedrigen Außentemperaturen einfach die Kühlluftmenge durch Verringern der Drehzahl des Gebläses vermindern.

Ganz besonders kostengünstig ist die Druckwechselanlage ausgebildet, wenn als erste Vakuumpumpe ein Radialgebläse mit einer regelbaren Drossel in seiner Ansaugleitung vorgesehen ist.

Günstig ist es auch, wenn in jeden Adsorber nur eine für den Überdruck und Unterdruck gemeinsame Leitung von einer Verteilerleitung führt, wenn zu beiden Seiten des Anschlusses der Leitungen an die Verteilerleitung in die Verteilerleitung ein Luftventil und ein Vakuumventil geschaltet ist, wenn an beiden äußeren Enden der Verteilerleitung das Luftgebläse oder der Vakuumpumpstand und in die Mitte der Verteilerleitung zwischen den Luftventilen eine Leitung von dem Vakuumpumpstand führt. Hierdurch besteht mit sehr geringem Rohrleitungs- und Ventilaufwand die Möglichkeit, im Teillastbetrieb das Luftgebläse mit dem Einlass des Vakuumpumpstandes zu verbinden. Dadurch vermindert sich die Druckdifferenz des Vakuumpumpstandes auf etwa 200 mbar, so dass ohne den Aufwand eines aufwendigen Bypasses für den Vakuumpumpstand bei Teillastbetrieb mit entsprechend vermindertem Energiebedarf gefahren werden kann.

Eine Rückströmung von Sauerstoff aus dem Pufferbehälter durch die Adsorber und dann über den Vakuumpumpstand zur Atmosphäre bei Leerlaufbetrieb, bei welchem das Luftgebläse mit dem Einlass des Vakuumpumpstandes verbunden ist, kann sehr einfach dadurch verhindert werden, dass in die Produktentnahmeleitung eine Sperreinrichtung angeordnet ist.

Die Sperreinrichtung ist besonders einfach ausgebildet und benötigt keine Steuerung entsprechend der Adsorberaustrittsventile, wenn sie eine von dem Adsorber in Richtung des Speicherbehälters öffnende Rückschlagklappe ist.

Bei Teillastbetrieb kann man gänzlich ohne die erste, als Radialgebläse ausgebildete Vakuumpumpe und dadurch energetisch besonders günstig arbeiten, wenn gemäß einer anderen Weiterbildung der Erfindung die erste, als Radialgebläse ausgebildete Vakuumpumpe eine ihre Ansaugleitung unmittelbar mit der zweiten, als Drehkolbenpumpe ausgebildete Vakuumpumpe verbindende Bypassleitung hat, in welche eine zur zweiten Vakuumpumpe hin öffnende Rückschlagklappe geschaltet ist.

Zur weiteren Verbesserung der Energiebilanz trägt es bei, wenn zum Evakuieren der ersten, als Radialgebläse ausgebildeten Vakuumpumpe eine Hilfspumpe vorgesehen ist. Hierdurch kann das Radialgebläse im Teillastbereich laufen, ohne Arbeit leisten zu müssen.

Der Vakuumpumpstand vermag unabhängig von dem Luftgebläse Luft von der Atmosphäre anzusaugen, wenn in die das Luftgebläse mit den Adsorbern verbindende Leitung eine Lufteinlassleitung mit einer zur Atmosphäre hin schließenden Rückschlagklappe geschaltet ist. Eine solche Ausgestaltung ist jedoch nur in Ausnahmefällen notwendig.

Das zweitgenannte Problem, nämlich die Schaffung eines Verfahrens zum Betrieb einer Druckwechselanlage mit den vorgenannten Merkmalen, wird erfindungsgemäß dadurch gelöst, dass in Strömungsrichtung gesehen als zweite Vakuumpumpe eine voreinlassgekühlte Drehkolbenpumpe verwendet wird, in deren an die Förderräume (39) einmündenden Kühllufteintrittsöffnungen man zur Desorptionsgaskühlung definierte Außenluft atmosphärischen Drucks einströmen lässt und dass mit dem Vakuumpumpstand ein Desorptionsdruck zwischen 300 mbar und 500 mbar gefahren wird.

Bei einer solchen Verfahrensweise lässt sich ohne Kühlwasser oder Einspritzwasser mit einem gegenüber den bekannten Anlagen deutlich verminderten Energiebedarf Sauerstoff herstellen.

Energetisch besonders günstig ist es, wenn bei der zweiten Vakuumpumpe das Verhältnis des Gesamtmassenstromes des angesaugten Massenstroms von der ersten Vakuumpumpe und des Kühlluftmassenstroms zum Kühlluftmassenstrom am Anfang des Desorptionszyklus von einem hohen Wert rasch auf 33 abfällt und innerhalb des Desorptionszyklus bis zum Ende langsam auf 1,5 absinkt.

Für den Teillastbetrieb ist der Energiebedarf entsprechend der gewünschten, geringeren O₂-Menge niedriger, wenn man bei durch geringe O₂-Abnahme gekennzeichnetem Teilllastbetrieb den Adsorptionsdruck über den Adsorptionsdruck bei Volllastbetrieb ansteigen lässt und bei Erreichen eines festgelegten oberen Adsorptionsdruckes das Luftgebläse für die Adsorptionsluft vor den zweistufigen Vakuumpumpstand schaltet.

Die Teilllast-Betriebsweise kann mit besonders geringem Aufwand beendet werden, wenn der Druck am Speicherbehälter oder Pufferbehälter überwacht und bei Unterschreiten eines festgelegten Wertes die Luftventile und vakuumventile wieder auf zyklischen Adsorptions- und Desorptionsbetrieb geschaltet werden. Der gemessene Druckabfall gibt darüber Aufschluss, dass wieder vermehrt Sauerstoff entnommen wird.

Durch Versuche konnte ermittelt werden, dass der Energiebedarf besonders günstig ist, wenn gemäß einer anderen Weiterbildung des Verfahrens ein Adsorptionsdruck zwischen 0,7 bar und 1,8 bar, vorzugsweise zwischen 0,9 bar am Anfang und 1,5 bar am Ende der Adsorption, und ein Desorptionsdruck zwischen 350 mbar und 400 mbar gewählt wird und wenn der Startdruck für die Adsorption und Desorption nach der Spülphase und der Druckaufbauphase minimal 700 mbar und maximal 950 mbar beträgt.

Um nach dem Umschalten auf Druckaufbau in dem jeweiligen Adsorber den Druckaufbau auf Adsorptionsdruck in der gewünschten Zeit erreichen zu können, wird gemäß einer Weiterbildung des Verfahrens mittels einer Drossel in der Produktentnahmeleitung nach dem Pufferbehälter der Druck gedrosselt.

Günstig für den Betrieb der Druckwechselanlage ist es auch, wenn der Drossel ein Pufferbehälter nachgeschaltet und sein Volumen so bemessen wird, dass der Druck im Pufferbehälter zwischen 1,2 bar und 1,5 bar innerhalb eines Adsorptionszyklusses schwankt.

Das Luftgebläse für die Adsorptionsluft und der Vakuumpumpstand werden durch einen zwangsweise geführten Luftstrom gekühlt, ohne dass bei niedrigen Außentemperaturen die Gefahr einer zu geringen Lufteingangstemperatur in dem Adsorber besteht, wenn zur Kühlung der Anlageteile ein Gebläse eines für die Adsorptionsluft notwendigen Luftkühlers benutzt wird, wenn ein Kühlluftstrom entlang des Vakuumpumpstandes und des Pumpstandes für die Adsorptionsluft zu dem Gebläse geführt wird und wenn das Gebläse mittels eines frequenzgeregelten Ventilatormotors so geregelt wird, dass die Lufteintrittstemperatur in den Adsorber nicht unter einen unteren Wert absinkt. In der Praxis hat sich gezeigt, dass sich die O₂-Konzentration erheblich verringert, wenn die Adsorptionstemperaturen unter 20°C sinken. Durch die erfindungsgemäße Verfahrensweise kann man durch Verringern der Menge des Kühlluftstromes sich sinkenden Außentemperaturen anpassen.

Ist die Außentemperatur so niedrig, dass die Verringerung der Drehzahl des Gebläses für den Kühlluftstrom nicht ausreicht, um Adsorptionstemperaturen über 20°C zu erhalten, kann man gemäß einer Weiterbildung der Erfindung bei niedrigen Außentemperaturen die heiße Abluft des Vakuumpumpstandes zur Anhebung der Temperatur der Luft des Luftgebläses benutzen. Dabei wird vor dem Luftgebläse eine Drosselklappe so geschaltet, dass ein Teilstrom kalte Luft aus dem den Vakuumpumpstand enthaltenden Container und ein weiterer, durch die Vakuumabluft über einen Wärmetauscher vorgewärmter Teilstrom unmittelbar am Abluftaustritt angesaugt wird. Dadurch wird das Temperaturniveau nach dem Luftgebläse entsprechend angehoben, so dass über die Drehzahlregelung des Gebläsemotors für den Kühlluftstrom die 20°C Adsorptionstemperatur gehalten werden kann. Diese Vorwärmung ist möglich, weil die zweite Vakuumpumpe gemäß der Erfindung ohne Wassereinspritzung und damit bei höheren Temperaturen arbeitet als nach dem Stand der Technik.

Zur weiteren Verdeutlichung der Erfindung wird nachfolgend auf die Zeichnung Bezug genommen. Diese zeigt in
- Fig.1: einen Schaltplan einer Druckwechselanlage nach der Erfindung,
- Fig.2: eine als Drehkolbenpumpe ausgebildete Vakuumpumpe für einen Vakuumpumpstand der erfindungsgemäßen Druckwechselanlage.

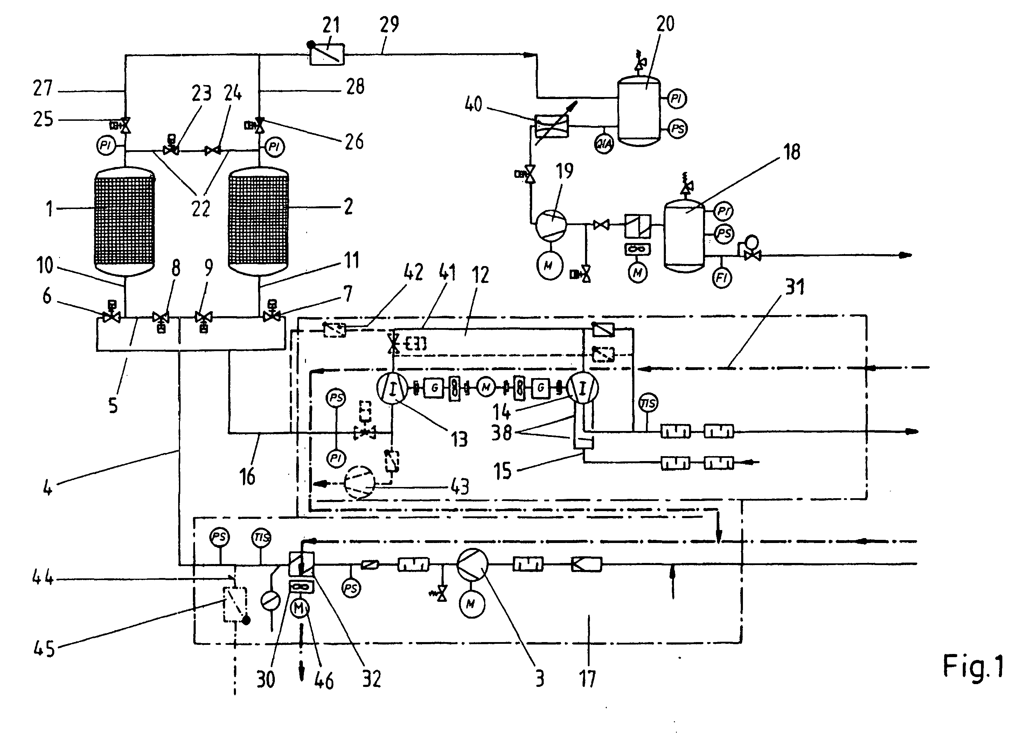

Die Figur 1 zeigt eine erfindungsgemäße PVSA-Anlage (Pressure-Vakuum-Swing-Adsorptions-Anlage), welche mit synthetischem Zeolith in zwei parallel geschalteten Adsorbern 1, 2 arbeitet. Diesen wird mittels eines als Drehkolbenpumpe ausgebildeten Luftgebläses 3 eines Pumpstandes 17 wechselweise Luft zugeführt. Außerdem dient das Luftgebläse 3 dazu, den erforderlichen Adsorptionsdruck zu erzeugen und aufrechtzuerhalten. Hierzu verbindet eine Leitung 4 das Luftgebläse 3 mit einer Verteilerleitung 5, in welche außen zwei Vakuumventile 6, 7 und innen zwei Luftventile 8, 9 geschaltet sind. Die Leitung 4 mündet zwischen den Luftventilen 8, 9 in die Verteilerleitung 5, während jeweils zwischen einem Vakuumventil 6, 7 und einem Luftventil 8, 9 eine Leitung 10, 11 zu dem Adsorber 1 bzw. 2 führt.

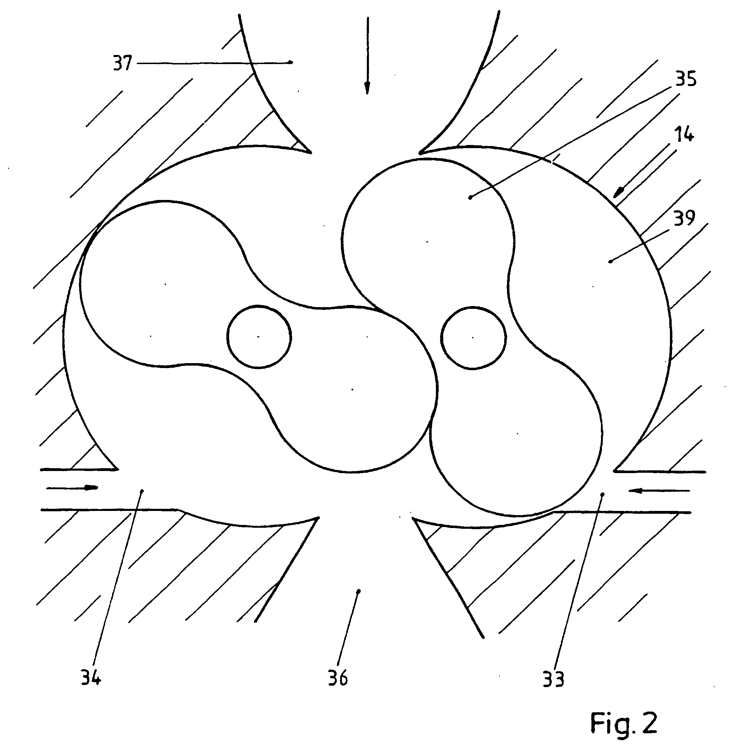

Zur wechselseitigen Evakuierung der Adsorber 1, 2 und damit zum Ansaugen der stickstoffangereicherten Fraktion aus den Adsorbern 1, 2 dient ein Vakuumpumpstand 12, der hintereinander zwei Vakuumpumpen 13, 14 aufweist. Bei der Vakuumpumpe 14, die die zweite Pumpstufe bildet und auf der Seite der Atmosphäre angeordnet ist, handelt es sich um eine voreinlassgekühlte Drehkolbenpumpe, welche später genauer anhand der Figur 2 beschrieben wird. In diese zweite Vakuumpumpe 14 strömt Luft aus der Atmosphäre als Kühlluft über eine Leitung 15 hinein.

Der Vakuumpumpstand 12 ist mittels einer Ansaugleitung 16 mit den beiden äußeren Enden der Verteilerleitung 5 verbunden. Die Vakuumventile 6, 7 und Luftventile 8, 9 ermöglichen es, im Teillastbetrieb die Ansaugseite der ersten Vakuumpumpe 13 des Vakuumpumpstandes 12 mit Druckluft vom Luftgebläse 3 zu beaufschlagen.

Die Sauerstoffentnahme erfolgt hinter einem Speicherbehälter 18, dem ein Gebläse 19 oder Kompressor vorgeschaltet ist, so dass der Sauerstoff mit Überdruck anfällt. Dem Gebläse 19 oder Kompressor vorgeschaltet ist ein Pufferbehälter 20, in den der Sauerstoff, welcher eine Reinheit von bis zu 95 % hat, über eine Sperreinrichtung 21 gelangt. Bei der Sperreinrichtung 21 handelt es sich um eine von den Adsorbern 1, 2 zum Speicherbehälter 18 hin öffnende Rückschlagklappe.

Die Auslässe der beiden Adsorber 1, 2 sind durch eine Verbindungsleitung 22 miteinander verbunden, in welche ein Sperrventil 23 und eine Drossel 24 geschaltet ist.

Mit Hilfe dieser Verbindungsleitung 22, dem Sperrventil 23 und der Drossel 24 werden die beiden Adsorber 1 und 2 zum Spülen und zum ersten Druckaufbau nach jeder Desorptionsphase bzw. Adsorptionsphase für den Spülvorgang miteinander verbunden und der auf einen Enddruck von 350 mbar regenerierte Adsorber 1 oder 2 von dem noch in Adsorption befindlichen Adsorber 2 oder 1 bei zugeschaltetem Luftgebläse 3 und Vakuumpumpstand 12 gespült und dabei ein erster Druckaufbau des regenerierten Adsorbers auf ca. 500 mbar erzielt. Nach diesem Spülvorgang werden Produktentnahmeventile 25, 26 in Leitungen 27, 28, welche zu einer Produktentnahmeleitung 29 mit dem Rückschlagventil 21 führen, aufgeschaltet. Durch gleichzeitiges Öffnen des dem jeweiligen Adsorber 1 oder 2 zugeordneten Luftventils 8 oder 9 wird dieser dann mit dem Luftgebläse 3 als auch mit dem Pumpstand 12 verbunden, so dass in dem regenerierten Adsorber 1 oder 2 ein erneuter Druckaufbau bzw. ein Druckausgleich in beiden Adsorbern 1 und 2 oben und unten erfolgen kann. Der untere Druckausgleich funktioniert genau so wie der Teillastbetrieb, nur dass diese Funktion zeitlich sehr kurz ist und sich zyklisch immer wiederholt. Wenn zum Beispiel der Adsorber 1 regeneriert und der Adsorber 2 adsorbiert, dann sind die unteren Ventile folgendermaßen geschaltet: Ventil 6 offen, Ventil 8 zu, Ventil 9 offen und Ventil 7 zu. Beim unteren Druckausgleich wird innerhalb der Druckausgleichszeit innerhalb einer gewissen Zeit zusätzlich das Ventil 8 geöffnet. Danach wird das Ventil 7 geöffnet und Ventil 8 geschlossen und nach Ablauf der Druckausgleichszeit Ventil 9 geschlossen. Dadurch wird gewährleistet, dass während des unteren Druckausgleichs genau wie bei Teillastbetrieb immer eine Verbindung des Vakuumpumpstandes 12 zum Luftgebläse 3 besteht. Von Vorteil ist dabei, dass innerhalb der Druckausgleichszeit die Ventile in die richtige Position für die nachfolgende Adsorption und Desorption gebracht werden, so dass die Zeiten, innerhalb der keine Produktion erfolgt, besonders gering sind.

Durch die beschriebene Art des Druckausgleichs erfolgt der untere Druckausgleich gleichzeitig mit dem oberen Druckausgleich. Dadurch wird aus dem jeweiligen Adsorber Stickstoff nach unten hin abgesaugt. Durch den Druckausgleich strömt in den regenerierten Adsorber nicht der Stickstoff aus dem ersten Adsorber, sondern überwiegend Luft.

Nach Ablauf des Druckaufbaus von 500 mbar auf 900 mbar wird so das entsprechende Vakuumventil 7 bzw. 6 des regenerierten Adsorbers 1 oder 2 geschlossen und für den zu regenerierenden Adsorber 1 oder 2 gleichzeitig das entsprechende Produktentnahmeventil 25 bzw. 26 geschlossen, so dass die Adsorptionsphase im regenerierten Adsorber 1 oder 2 bzw. die Desorptionsphase im zuvor in Adsorption befindlichen Adsorber 1 oder 2 erfolgt.

Beim Pumpstand 17 mit dem Luftgebläse 3 wurde lediglich ein mit Luft als Kühlmittel arbeitender Luftkühler 32 positioniert, dem ein Gebläse 30 zugeordnet ist, durch welches ein Kühlluftstrom 31 zunächst an einer Seite des Vakuumpumpstandes 12, dann an seiner anderen Seite zurück und anschließend entlang des Pumpstandes 17 für die Adsorptionsluft durch den Luftkühler 32 gesaugt wird. Nicht positioniert wurden die üblichen Bauteile, wie Filter, Schalldämpfer, ein Sicherheitsventil und Ventile. Der Luftkühler 32 dient dazu, die von dem als Drehkolbengebläse ausgebildeten Luftgebläse 3 auf maximal 1,5 bar verdichtete Luft zurückzukühlen. Die Einstellung dieses Druckes erfolgt durch die Produktentnahmemenge und die Drossel 40 hinter dem Pufferbehälter 20, so dass in dem jeweils auf Adsorption geschalteten Adsorber 1 oder 2 der gewünschte maximale Druck nach jeder Adsorptionsphase erreicht wird. Die Regelung der Adsorptionstemperatur erfolgt durch Drehzahlregelung des Gebläses 30 mittels eines frequenzgesteuerten Ventilatormotors 46.

Auch beim Vakuumpumpstand 12 wurden übliche Bauteile nicht positioniert. Wichtig für die Erfindung ist, dass die von der ersten Vakuumpumpe 13 kommende, komprimierte, heiße und sauerstoffabgereicherte Luft von 50°C bis maximal 110°C pro Zyklus direkt der zweiten Vakuumpumpe 14 zugeführt und von der zweiten Vakuumpumpe 14 mit dieser Temperatur angesaugt wird.

In Figur 1 ist desweiteren eine Bypassleitung 41 dargestellt, über welche die zweite Vakuumpumpe 14 unter Umgehung der ersten Vakuumpumpe 13 unmittelbar mit den Adsorbern 1 und 2 verbindbar ist. In diese Bypassleitung 41 ist eine Rückschlagklappe 42 geschaltet, welche zur zweiten Vakuumpumpe 14 hin öffnet. Zum Evakuieren der ersten Vakuumpumpe 13 kann eine Hilfspumpe 43 vorgesehen sein.

Um den Vakuumpumpstand 12 einlassseitig auch bei Stillstand des Luftgebläses mit der Atmosphäre zu verbinden, mündet in die Leitung 4 eine Lufteinlassleitung 44 mit einer zur Atmosphäre hin schließenden Rückschlagklappe 45.

Die Gestaltung der Vakuumpumpe 14 ist genauer anhand der Figur 2 zu erkennen. Diese hat einen Einlassstutzen 37, einen Auslassstutzen 36 und zwei Drehkolben 35. Speziell ausgebildete Kühllufteintrittsöffnungen 33, 34 sorgen dafür, dass das angesaugte, heiße Gas mit kalter Luft in der Vakuumpumpe 14 vermischt wird, wobei ein jeweiliger Förderraum 39 mit dem heißen Gas vor öffnung seines jeweiligen Drehkolbens 35 zu seinem Auslassstutzen 36 mit kalter Luft vermischt und auf Atmosphärendruck geflutet und somit die Verdichtung auf Atmosphärendruck mit einströmender, kalter Luft vorgenommen wird, bevor der Drehkolben 35 die Verbindung zum Auslassstutzen 36 freigibt. Hierdurch strömt das Gas mit einer Temperatur pro Zyklus von ca. 70 °C bis maximal 120°C aus der zweiten Vakuumpumpe 14. Die Kühllufteintrittsöffnungen 33, 34 liegen im zweiten Quadranten, beginnen frühestens bei 36° und enden spätestens bei 90°.

Wie die Figur 1 erkennen lässt, verzweigt sich die Leitung 15 zu einem Hosenrohr 38, um beide Kühllufteintrittsöffnungen 33, 34 mit der Atmosphäre zu verbinden. Dadurch kommt es in der Leitung 15 zu Pulsationen doppelter Grundfrequenz, so dass einfache Pulsationsdämpfer genügen.

Die beschriebene Druckwechselanlage arbeitet vorzugsweise mit einer Gesamtzykluszeit von 2 x 33 bis 2 x 45 sec. Dabei entfallen auf die Spül- und Druckausgleichsphase 7 bis maximal 15 sec. Diese Spül- und Druckausgleichsphase wird vorgenommen, wenn die wechselweise erfolgende Umschaltung von Absorption auf Desorption in dem einen Adsorber 1 oder 2 bzw. von Desorption auf Adsorption in dem anderen Adsorber 1 oder 2 erfolgt.

Abschließend sei angemerkt, dass es sich bei allen Druckangaben um absolute Drücke handelt.

### Bezugszeichenliste

- 1: Adsorber
- 2: Adsorber
- 3: Luftgebläse
- 4: Leitung
- 5: Verteilerleitung

- 6: Vakuumventil
- 7: Vakuumventil
- 8: Luftventil
- 9: Luftventil
- 10: Leitung

- 11: Leitung
- 12: Vakuumpumpstand
- 13: Vakuumpumpe
- 14: Vakuumpumpe
- 15: Leitung

- 16: Ansaugleitung
- 17: Pumpstand
- 18: Speicherbehälter
- 19: Gebläse
- 20: Pufferbehälter

- 21: Sperreinrichtung
- 22: Verbindungsleitung
- 23: Sperrventil
- 24: Drossel
- 25: Produktentnahmeventil

- 26: Produktentnahmeventil
- 27: Leitung
- 28: Leitung
- 29: Produktentnahmeleitung
- 30: Gebläse

- 31: Kühlluftstrom
- 32: Luftkühler
- 33: Kühllufteintrittsöffnung
- 34: Kühllufteintrittsöffnung
- 35: Drehkolben

- 36: Auslassstutzen
- 37: Einlassstutzen
- 38: Hosenrohr
- 39: Förderraum
- 40: Drossel

- 41: Bypassleitung
- 42: Rückschlagklappe
- 43: Hilfspumpe
- 44: Lufteinlassleitung
- 45: Rückschlagklappe

- 46: Ventilator

## Patentansprüche

1. Druckwechselanlage zur Gewinnung von Sauerstoff aus der Luft, welche zumindest einen Adsorber (1, 2) mit synthetischem Zeolith hat, an welchem zum wechselnden Betrieb ein Luftgebläse (3) die Adsorptionsluft und ein Vakuumpumpstand (12) zur Desorption des Adsorbers (1, 2) angeschlossen sind, wobei der Vakuumpumpstand (12) zwei hintereinander geschaltete vakuumpumpen (13, 14) hat und Mittel vorgesehen sind, um das Desorptionsgas zu kühlen, **dadurch gekennzeichnet, dass** in Strömungsrichtung gesehen die zweite Vakuumpumpe (14) eine voreinlassgekühlte Drehkolbenpumpe ist und die Mittel aus Kühllufteintrittsöffnungen (33, 34) an der zweiten Vakuumpumpe zum definierten Einströmen von Außenluft atmosphärischen Drucks in die Förderräume (39) der zweiten Vakuumpumpe (14) bestehen, und dass der Vakuumpumpstand (12) mit Steuereinrichtungen zum Erzeugen eines Desorptionsdruckes zwischen 300 mbar und 500 mbar versehen ist.

2. Druckwechselanlage nach Anspruch 1, **dadurch gekennzeichnet, dass** die Kühllufteintrittsöffnungen (33, 34) der zweiten Vakuumpumpe (14) so bemessen und positioniert sind, dass das Verhältnis des Gesamtmassenstromes des angesaugten Massenstroms von der ersten Vakuumpumpe (13) und des Kühlluftmassenstroms zum Kühlluftmassenstrom am Anfang des Desorptionszyklus von einem hohen Wert rasch auf 33 abfällt und innerhalb des Desorptionszyklus bis zum Ende langsam auf 1,5 absinkt.

3. Druckwechselanlage nach Anspruch 2, **dadurch gekennzeichnet, dass** die Kühllufteintrittsöffnungen (33, 34) im zweiten Quadranten frühestens bei 36° beginnen und vor 90° enden.

4. Druckwechselanlage nach zumindest einem der vorangehenden Ansprüche, **dadurch gekennzeichnet, dass** die Kühllufteintrittsöffnungen (33, 34) über eine gemeinsame Leitung (15) mit der Atmosphäre verbunden sind.

5. Druckwechselanlage nach zumindest einem der vorangehenden Ansprüche, **dadurch gekennzeichnet, dass** zur Kühlung der Anlageteile ein Gebläse (30) eines für die Adsorptionsluft notwendigen Luftkühlers (32) vorgesehen ist und dass ein Kühlluftstrom (31) entlang des Vakuumpumpstandes (12) und des Pumpstandes (17) für die Adsorptionsluft zu dem Gebläse (30) führt.

6. Druckwechselanlage nach zumindest einem der vorangehenden Ansprüche, **dadurch gekennzeichnet, dass** das Gebläse (30) ein Ventilatormotor (46) mit geregelter Drehzahl aufweist.

7. Druckwechselanlage nach zumindest einem der vorangehenden Ansprüche, **dadurch gekennzeichnet, dass** als erste Vakuumpumpe (13) ein Radialgebläse mit einer regelbaren Drossel in seiner Ansaugleitung (16) vorgesehen ist.

8. Druckwechselanlage nach zumindest einem der vorangehenden Ansprüche, **dadurch gekennzeichnet, dass** in jeden Adsorber (1, 2) nur eine für den Überdruck und Unterdruck gemeinsame Leitung (10, 11) von einer Verteilerleitung (5) führt, dass zu beiden Seiten des Anschlusses der Leitungen (10, 11) an die Verteilerleitung (5) in die Verteilerleitung (5) ein Luftventil (8, 9) und ein Vakuumventil (6, 7) geschaltet ist, dass an beiden äußeren Enden der Verteilerleitung (5) der Vakuumpumpstand (12) und in die Mitte der Verteilerleitung (5) zwischen den Luftventilen (8, 9) eine Leitung (4) von dem Luftgebläse (3) führt.

9. Druckwechselanlage nach zumindest einem der vorangehenden Ansprüche, **dadurch gekennzeichnet, dass** in die Produktentnahmeleitung (29) zur Verhinderung einer Sauerstoffströmung von dem Pufferbehälter (20) zu dem Adsorber (1, 2) eine Sperreinrichtung (21) angeordnet ist.

10. Druckwechselanlage nach Anspruch 9, **dadurch gekennzeichnet, dass** die Sperreinrichtung (21) eine von dem Adsorber (1, 2) in Richtung des Speicherbehälters (18) hin öffnende Rückschlagklappe ist.

11. Druckwechselanlage nach zumindest einem der vorangehenden Ansprüche, **dadurch gekennzeichnet, dass** die erste, als Radialgebläse ausgebildete Vakuumpumpe (13) eine ihre Ansaugleitung (16) unmittelbar mit der zweiten, als Drehkolbenpumpe ausgebildet Vakuumpumpe (14) verbindende Bypassleitung (41) hat, in welche eine zur zweiten Vakuumpumpe (14) hin öffnende Rückschlagklappe (42) geschaltet ist.

12. Druckwechselanlage nach zumindest einem der vorangehenden Ansprüche, **dadurch gekennzeichnet, dass** zum Evakuieren der ersten als Radialgebläse ausgebildeten Vakuumpumpe (13) eine Hilfspumpe (43) vorgesehen ist.

13. Druckwechselanlage nach zumindest einem der vorangehenden Ansprüche, **dadurch gekennzeichnet, dass** in die das Luftgebläse (3) mit den Adsorbern (1, 2) verbindende Leitung (4) eine Lufteinlassleitung (44) mit einer zur Atmosphäre hin schließenden Rückschlagklappe (45) geschaltet ist.

14. verfahren zum Betrieb einer Druckwechselanlage zur Gewinnung von Sauerstoff aus der Luft, welche zumindest einen Adsorber hat, welcher wechselnd zur Adsorption von Stickstoff mit Überdruck und zur Desorption mit Unterdruck beaufschlagt wird, wobei zur Unterdruckbeaufschlagung ein Vakuumpumpstand mit zwei hintereinander geschalteten Vakuumpumpen sowie Mittel zur Desorptionsgaskühlung verwendet werden, **dadurch gekennzeichnet, dass** in Strömungsrichtung gesehen als zweite Vakuumpumpe eine voreinlassgekühlte Drehkolbenpumpe verwendet wird, in deren an die Förderräume (39) einmündenden Kühllufteintrittsöffnungen man zur Desorptionsgaskühlung definierte Außenluft atmosphärischen Drucks einströmen lässt und dass mit dem Vakuumpumpstand ein Desorptionsdruck zwischen 300 mbar und 500 mbar gefahren wird.

15. Verfahren nach Anspruch 14, **dadurch gekennzeichnet, dass** bei der zweiten Vakuumpumpe das Verhältnis des Gesamtmassenstromes des angesaugten Massenstroms von der ersten Vakuumpumpe und des Kühlluftmassenstroms zum Kühlluftmassenstrom am Anfang des Desorptionszyklus von einem hohen Wert rasch auf 33 abfällt und innerhalb des Desorptionszyklus bis zum Ende langsam auf 1,5 absinkt.

16. Verfahren nach den Ansprüchen 14 oder 15, **dadurch gekennzeichnet, dass** man bei durch geringe O₂-Abnahme gekennzeichnetem Teilllastbetrieb den Adsorptionsdruck über den Adsorptionsdruck bei Volllastbetrieb ansteigen lässt und bei Erreichen eines festgelegten oberen Adsorptionsdruckes das Luftgebläse für die Adsorptionsluft vor den zweistufigen Vakuumpumpstand schaltet.

17. Verfahren nach den Ansprüchen 14 bis 16, **dadurch gekennzeichnet, dass** der Druck am Speicherbehälter oder Pufferbehälter überwacht und bei Unterschreiten eines festgelegten Wertes die Luftventile und Vakuumventile wieder auf zyklischen Adsorptions- und Desorptionsbetrieb geschaltet werden.

18. Verfahren nach zumindest einem der vorangehenden Ansprüche 14 - 17, **dadurch gekennzeichnet, dass** ein Adsorptionsdruck zwischen 0,7 bar und 1,8 bar, vorzugsweise zwischen 0,9 bar am Anfang und 1,5 bar am Ende der Adsorption, und ein Desorptionsdruck zwischen 350 mbar und 400 mbar gewählt wird und dass der Startdruck für die Adsorption und Desorption nach der Spülphase und der Druckaufbauphase minimal 700 mbar und maximal 950 mbar beträgt.

19. Verfahren nach zumindest einem der vorangehenden Ansprüche 14 - 18, **dadurch gekennzeichnet, dass** mittels einer Drossel in der Produktentnahmeleitung nach dem Pufferbehälter der Druckaufbau auf Adsorptionsenddruck in einer gewünschten Zeit nach dem Umschalten eines Adsorbers auf Druckaufbau ermöglicht wird.

20. Verfahren nach zumindest einem der vorangehenden Ansprüche 14 - 19, **dadurch gekennzeichnet, dass** der Drossel ein Pufferbehälter nachgeschaltet und sein Volumen so bemessen wird, dass der Adsorptionsdruck im Pufferbehälter zwischen 1,2 bar und 1,5 bar innerhalb eines Adsorptionszyklusses schwankt.

21. Verfahren nach zumindest einem der vorangehenden Ansprüche, **dadurch gekennzeichnet, dass** zur Kühlung der Anlageteile ein Gebläse eines für die Adsorptionsluft notwendigen Luftkühlers benutzt wird, dass ein Kühlluftstrom entlang des Vakuumpumpstandes und des Pumpstandes für die Adsorptionsluft zu dem Gebläse geführt wird und dass das Gebläse mittels eines frequenzgeregelten Ventilatormotors so geregelt wird, dass die Lufteintrittstemperatur in den Adsorber nicht unter einen unteren Wert absinkt.

22. Verfahren nach Anspruch 21, **dadurch gekennzeichnet, dass** bei niedrigen Außentemperaturen die heiße Abluft des Vakuumpumpstandes zur Anhebung der Temperatur der Luft des Luftgebläses benutzt wird.

## Claims

1. A pressure swing adsorption plant for separating oxygen from the air, comprising at least one adsorber (1, 2) with synthesized zeolite, to which an air blower (3) for the adsorption air and a vacuum pump stand (12) for the desorption of the adsorber (1, 2) are connected in order to realize the pressure swing operation, wherein the vacuum pump stand (12) contains two vacuum pumps (13, 14) that are connected in series, and wherein means are provided for cooling the desorption gas, **characterized in that** the second vacuum pump (14) referred to the flow direction consists of a rotary piston pump with inlet precooling, wherein the means consist of inlet openings (33, 34) for the cooling air on the second vacuum pump in order to achieve a defined inflow of outside air of atmospheric pressure into the pump chambers (39) of the second vacuum pump (14), and **in that** the vacuum pump stand (12) is provided with control devices for generating a desorption pressure between 300 mbar and 500 mbar.

2. The pressure swing adsorption plant according to Claim 1, **characterized in that** the inlet openings (33, 34) for the cooling air on the second vacuum pump (14) are dimensioned and positioned in such a way that the ratio between the total mass flow, which is composed of the mass flow taken in by the first vacuum pump (13) and the cooling air mass flow, and the cooling air mass flow rapidly drops from a high value to 33 at the beginning of the desorption cycle and slowly drops within the desorption cycle to the final value of 1.5.

3. The pressure swing adsorption plant according to Claim 2, **characterized in that** the inlet openings (33, 34) for the cooling air that are situated in the second quadrant begin at an angle greater than 36° and end at an angle smaller than 90°.

4. The pressure swing adsorption plant according to at least one of the preceding claims, **characterized in that** the inlet openings (33, 34) for the cooling air are connected to the atmosphere via a common line (15).

5. The pressure swing adsorption plant according to at least one of the preceding claims, **characterized in that** the plant components are cooled with a blower (30) of an air cooler (32) required for the adsorption air, and **in that** a cooling air flow (31) leads to the blower (30) along the vacuum pump stand (12) and the pump stand (17) for the adsorption air.

6. The pressure swing adsorption plant according to at least one of the preceding claims, **characterized in that** the blower (30) contains a speed-controlled fan motor (46).

7. The pressure swing adsorption plant according to at least one of the preceding claims, **characterized in that** the first vacuum pump (13) consists of a radial compressor with a controllable throttle in its suction line (16).

8. The pressure swing adsorption plant according to at least one of the preceding claims, **characterized in that** only one common line (10, 11) for the positive pressure and the negative pressure leads into each adsorber (1, 2) from a distribution line (5), **in that** an air valve (8, 9) and a vacuum valve (6, 7) are arranged in the distribution line (5) to both sides of the connection of the lines (10, 11) to the distribution line (5), and **in that** the vacuum pump stand (12) leads to both outer ends of the distribution line (5) and a line (4) leads from the air blower (3) to the center of the distribution line (5) between the air valves (8, 9).

9. The pressure swing adsorption plant according to at least one of the preceding claims, **characterized in that** a shut-off device (21) is arranged in the product withdrawal line (29) in order to prevent an oxygen flow from the buffer container (20) to the adsorber (1, 2).

10. The pressure swing adsorption plant according to Claim 9, **characterized in that** the shut-off device (21) consists of a check valve that opens from the adsorber (1, 2) toward the storage container (18).

11. The pressure swing adsorption plant according to at least one of the preceding claims, **characterized in that** the first vacuum pump (13) in the form of a radial compressor contains a bypass line (41) that directly connects its suction line (16) to the second vacuum pump (14) in the form of a rotary piston pump, wherein said bypass line contains a check valve (42) that opens toward the second vacuum pump (14).

12. The pressure swing adsorption plant according to at least one of the preceding claims, **characterized in that** an auxiliary pump (43) is provided for evacuating the first vacuum pump (13) in the form of a radial compressor.

13. The pressure swing adsorption plant according to at least one of the preceding claims, **characterized in that** an air inlet line (44) with a check valve (45) that closes toward the atmosphere is arranged in the line (4) that connects the air blower (3) to the adsorbers (1, 2).

14. A method for operating a pressure swing adsorption plant that serves for separating oxygen from the air and comprises at least one adsorber that can be alternately subjected to a positive pressure for the adsorption of nitrogen and to a negative pressure for the desorption, wherein the adsorber is subjected to a negative pressure by means of a vacuum pump stand with two vacuum pumps that are connected in series, and wherein the pressure swing adsorption plant also contains means for cooling the desorption gas, **characterized in that** the second vacuum pump referred to the flow direction consists of a rotary piston pump with inlet precooling, wherein the desorption gas is cooled by introducing outside air of atmospheric pressure in a defined fashion into the cooling air inlet openings of said rotary piston pump that lead to the pump chambers (39), and **in that** the desorption pressure generated by the vacuum pump stand lies between 300 mbar and 500 mbar.

15. The method according to Claim 14, **characterized in that**, with respect to the second vacuum pump, the ratio between the total mass flow, which this composed of the mass flow taken in by the first vacuum pump and the cooling air mass flow, and the cooling air mass flow rapidly drops from a high value to 33 at the beginning of the desorption cycle and slowly drops within the desorption cycle to the final value of 1.5.

16. The method according to Claims 14 or 15, **characterized in that** the adsorption pressure is increased above the adsorption pressure of the full load operation during the part load operation that is **characterized by** a low O₂ decrease, and in that the air blower for the adsorption air switches in front of the two-stage vacuum stand once a defined upper adsorption pressure is reached.

17. The method according to Claims 14-16, **characterized in that** the pressure in the storage container or buffer container is monitored, and **in that** the air valves and vacuum valves are switched back to a cyclic adsorption and desorption mode if a defined value is not reached.

18. The method according to at least one of Claims 14-17, **characterized in that** the adsorption pressure is adjusted to a value between 0.7 bar and 1.8 bar, preferably between 0.9 bar, at the beginning of the adsorption and to a value of 1.5 bar at the end of the adsorption, wherein the desorption pressure is adjusted to a value between 350 mbar and 400 mbar, and **in that** the starting pressure for the adsorption and the desorption amounts to no less than 700 mbar and no more than 950 mbar after the rinsing phase and the pressure build-up phase.

19. The method according to at least one of Claims 14-18, **characterized in that** the pressure can be built up to the adsorption pressure within a desired time after changing over an adsorber to the pressure build-up mode, namely by means of at least one throttle that is arranged in the product withdrawal line downstream of the buffer container.

20. The method according to at least one of Claims 14-19, **characterized in that** a buffer container is arranged downstream of the throttle and its volume is chosen such that the adsorption pressure in the buffer container fluctuates between 1.2 bar and 1.5 bar within an adsorption cycle.

21. The method according to at least one of the preceding claims, **characterized in that** the plant components are cooled with a blower of an air cooler required the adsorption air, **in that** a cooling air flow leads to the blower along the vacuum pump stand and the pump stand for the adsorption air, and **in that** the blower is controlled by means of a frequency-regulated fan motor in such a way that the temperature of the air taken in by the adsorber does not drop below a minimum value.

22. The method according to Claim 21, **characterized in that** the hot exhaust air of the vacuum pump stand is used for raising the temperature of the air of the air blower at low outside temperatures.

## Revendications

1. Installation à alternance de pression destinée à extraire de l'oxygène de l'air, qui possède au moins un adsorbeur (1, 2) contenant de la zéolithe synthétique, auquel un ventilateur d'air (3) pour l'air d'adsorption et un banc de pompes à vide (12) pour la désorption de l'adsorbeur (1, 2)sont raccordés pour le fonctionnement alterné, le banc de pompes à vide(12) possédant deux pompes à vide (13, 14) branchées l'une à la suite de l'autre et des moyens étant prévus pour refroidir le gaz de désorption, **caractérisé en ce que** la deuxième pompe à vide (14), vu dans le sens de l'écoulement, est une pompe à pistons rotatifs refroidie en amont de l'entrée et que les moyens sont constitués par des ouvertures d'entrée d'air de refroidissement (33, 34) prévues sur la deuxième pompe à vide pour réaliser une entrée définie d'air extérieur à la pression atmosphérique dans les espaces de refoulement (39)de la deuxième pompe à vide (14), et **en ce que** le banc de pompes à vide (12) est muni de dispositifs de commande servant à produire une pression de désorption d'entre 300 mbar et 500 mbar.

2. Installation à alternance de pression selon la revendication 1, **caractérisée en ce que** les ouvertures d'entrée d'air de refroidissement (33, 34) de la deuxième pompe à vide(14) sont calculées et positionnées de manière que le rapport du débit massique total formé du débit massique aspiré par la première pompe à vide (13) et du débit massique d'air de refroidissement par rapport au débit massique du débit d'air de refroidissement au début du cycle de désorption, décroît rapidement d'une valeur élevée jusqu'à 33 et, dans le cycle de désorption tombe lentement jusqu'à la fin pour atteindre 1,5 .

3. Installation à alternance de pression selon la revendication 2, **caractérisée en ce que** les ouvertures d'entrée d'air de refroidissement (33, 34) commencent, au plus tôt à 36 ° et se terminent avant 90 ° dans le deuxième quadrant.

4. Installation à alternance de pression selon au moins une des revendications précédentes, **caractérisée en ce que** les ouvertures d'entrée d'air de refroidissement (33, 34) sont reliées à l'atmosphère par une conduite commune (15).

5. Installation à alternance de pression selon au moins une des revendications précédentes, **caractérisée en ce que**, pour le refroidissement des parties de l'installation, il est prévu un ventilateur (30) appartenant à un refroidisseur d'air (32) nécessaire pour l'air d'adsorption, et **en ce qu'**un flux d'air de refroidissement (31) circule le long du banc de pompes à vide (12) et du banc de pompes (17) prévu pour l'air d'adsorption pour le ventilateur (30).

6. Installation à alternance de pression selon au moins une des revendications précédentes, **caractérisée en ce que** le ventilateur (30) présente un moteur de ventilateur (46) à vitesse de rotation régulée.

7. Installation à alternance de pression selon au moins une des revendications précédentes, **caractérisée en ce qu'**il est prévu comme première pompe à vide (13) un ventilateur radial possédant un étranglement réglable dans sa conduite d'aspiration (16).

8. Installation à alternance de pression selon au moins une des revendications précédentes, **caractérisée en ce que** seulement une conduite (10, 11) commune pour la surpression et la dépression mène d'une conduite de distribution (5) à chaque adsorbeur (1, 2), **en ce que**, des deux côtés du raccordement des conduites (10, 11) à la conduite de distribution (5), sont branchées dans la conduite de distribution (5) une soupape d'air (8, 9) et une soupape de vide (6, 7), **en ce que** le banc de pompes à vide (12) mène aux deux extrémités extérieures de la conduite de distribution (5) et qu'une conduite(4) en provenance du ventilateur d'air (3) aboutit au milieu de la conduite de distribution (5) entre les soupapes d'air (8, 9).

9. Installation à alternance de pression selon au moins une des revendications précédentes, **caractérisée en ce qu'**un dispositif d'arrêt (21) est agencé dans la conduite de prélèvement de produit (29) pour empêcher un écoulement d'oxygène du récipient tampon (20) à l'adsorbeur (1, 2).

10. Installation à alternance de pression selon la revendication 9, **caractérisée en ce que** le dispositif d'arrêt (21) est un clapet anti-retour qui s'ouvre de l'adsorbeur (1, 2) en direction du récipient accumulateur (18).

11. Installation à alternance de pression selon au moins une des revendications précédentes, **caractérisée en ce que** la première pompe à vide (13), constituée par un ventilateur radial possède une conduite de bipasse (41) qui relie directement sa conduite d'aspiration (16) à la deuxième pompe à vide (14) qui est constituée par une pompe à pistons rotatifs, conduite dans laquelle est monté un clapet anti-retour (42) qui s'ouvre vers la deuxième pompe à vide (14).

12. Installation à alternance de pression selon au moins une des revendications précédentes, **caractérisée en ce qu'**il est prévu une pompe auxiliaire (43) pour faire le vide dans la première pompe à vide (13) constituée par un ventilateur radial.

13. Installation à alternance de pression selon au moins une des revendications précédentes, **caractérisée en ce que**, dans la conduite (4) qui relie le ventilateur d'air (3) aux adsorbeurs (1, 2), est montée une conduite d'admission d'air (44) munie d'un clapet anti-retour (45) qui se ferme vers l'atmosphère.

14. Procédé pour faire fonctionner une installation à alternance de pression destinée à extraire de l'oxygène de l'air, qui possède au moins un adsorbeur qui est sollicité alternativement avec une surpression pour l'adsorption d'azote et avec une dépression pour la désorption, dans laquelle, pour la solliciter avec une dépression, on utilise un banc de pompes à vide possédant deux pompes à vide branchées l'une à la suite de l'autre, ainsi que des moyens pour le refroidissement du gaz de désorption, **caractérisé en ce que** qu'on utilise, comme deuxième pompe à vide, vu dans le sens de l'écoulement, une pompe à pistons rotatifs à refroidissement en amont de l'entrée dans les ouvertures d'entrée d'air de refroidissement de laquelle, qui débouche dans les espaces de refoulement (39), on laisse entrer de l'air extérieur à la pression atmosphérique prévue pour le refroidissement du gaz de désorption et **en ce qu'**avec le banc de pompes à vide, on produit une pression de désorption comprise entre 300 mbar et 500 mbar.

15. Procédé selon la revendication 14, **caractérisé en ce que** dans la deuxième pompe à vide, le rapport entre le débit massique total formé du débit massique aspiré de la première pompe à vide et du débit massique d'air de refroidissement, d'une part, et le débit massique d'air de refroidissement d'autre part, décroisse rapidement d'une haute valeur jusqu'à 33 au début du cycle de désorption et décroisse lentement jusqu'à 1,5 jusqu'à la fin dans le cycle de désorption,.

16. Procédé selon les revendications 14 ou 15, **caractérisé en ce que** dans un fonctionnement sous charge partielle, **caractérisée par** un faible prélèvement de O₂ , on fait monter la pression d'adsorption au-dessus de la pression d'adsorption du fonctionnement à pleine charge et que, lorsqu'on atteint une pression d' adsorption plus élevée prédéterminée, on met en marche le ventilateur d'air prévu pour l'air d'adsorption placé en amont du banc de pompes à vide à deux étages.

17. Procédé selon les revendications 14 à 16, **caractérisé en ce que** la pression dans le récipient accumulateur ou le récipient tampon est surveillée et si l'on passe au-dessous d'une valeur fixée, les soupapes d'air et les soupapes de vide sont de nouveau commutées sur le fonctionnement à adsorption et désorption cycliques.

18. Procédé selon au moins une des revendications précédentes 14-17, **caractérisé en ce qu'**on choisit une pression d'adsorption entre 0,7 bar et 1,8 bar, de préférence entre 0,9 bar au début et 1,5 bar à la fin de l'adsorption, et une pression de désorption entre 350 mbar et 400 mbar et que la pression de départ pour l'adsorption et pour la désorption après la phase de rinçage et la phase d'établissement de la pression vaut au minimum 700 mbar et au maximum 950 mbar.

19. Procédé selon au moins une des revendications précédentes 14-18, **caractérisé en ce que** l'établissement de la pression jusqu'à la pression finale de l'adsorption est rendu possible dans un temps souhaité après le basculement de l'adsorption sur l'établissement de pression au moyen d'un étranglement monté dans la conduite de prélèvement de produit en aval du récipient tampon.

20. Procédé selon au moins une des revendications précédentes 14-19, **caractérisé en ce qu'**un récipient tampon est monté en aval d'un étranglement et son volume est calculé de manière que la pression d'adsorption dans le récipient tampon fluctue entre 1,2 bar et 1,5 bar dans un même cycle d'adsorption

21. Procédé selon au moins une des revendications précédentes, **caractérisé en ce qu'**on utilise pour le refroidissement des parties de l'installation, un ventilateur appartenant à un refroidisseur d'air nécessaire pour l'air d'adsorption, qu'un flux d'air de refroidissement est guidé le long du banc de pompes à vide et du banc de pompe pour l'air d'adsorption envoyé au ventilateur et que le ventilateur est réglé, au moyen d'un moteur de ventilateur régulé en fréquence, de manière que la température d'entrée de l'air dans l'adsorbeur ne descende pas au-dessous d'une valeur inférieure.

22. Procédé selon la revendication 21, **caractérisé en ce qu'**en présence de basses températures extérieures, l'air d'échappement chaud du banc de pompes à vide est utilisé pour élever la température de l'air du ventilateur d'air.
